(19) Europäisches Patentamt
European Patent Office
Office européen des brevets

(11) **EP 3 596 745 B1**

(12) **EUROPÄISCHE PATENTSCHRIFT**

(45) Veröffentlichungstag und Bekanntmachung des Hinweises auf die Patenterteilung:
**26.05.2021 Patentblatt 2021/21**

(21) Anmeldenummer: **18720177.7**

(22) Anmeldetag: **18.04.2018**

(51) Int Cl.:
*H01H 33/30* (2006.01)      *H01H 33/662* (2006.01)
*H01H 33/666* (2006.01)

(86) Internationale Anmeldenummer:
**PCT/EP2018/059834**

(87) Internationale Veröffentlichungsnummer:
**WO 2018/202422 (08.11.2018 Gazette 2018/45)**

(54) **ANORDNUNG MIT EINER GASDRUCKFEDER FÜR EINE SEIL-ROTATIONSPENDEL-KINEMATIK UND VERWENDUNG DER ANORDNUNG ZUM SCHALTEN**

ASSEMBLY HAVING A GAS SPRING FOR A CABLE ROTARY-PENDULUM KINEMATIC SYSTEM AND USE OF THE ASSEMBLY FOR SWITCHING

ENSEMBLE COMPRENANT UN RESSORT DE COMPRESSION À GAZ POUR UN MÉCANISME CINÉMATIQUE CÂBLE-PENDULE ROTATIF ET UTILISATION DE L'ENSEMBLE AUX FINS DE COMMUTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.05.2017 DE 102017207629**

(43) Veröffentlichungstag der Anmeldung:
**22.01.2020 Patentblatt 2020/04**

(73) Patentinhaber: **Siemens Aktiengesellschaft 80333 München (DE)**

(72) Erfinder:
• **BACHMAIER, Georg 80469 München (DE)**
• **EBELSBERGER, Gerit 81737 München (DE)**
• **FREITAG, Reinhard 81379 München (DE)**
• **GERLICH, Matthias 80636 München (DE)**
• **MOCK, Randolf 85662 Hohenbrunn (DE)**

(56) Entgegenhaltungen:
WO-A1-2016/110430      GB-A- 1 182 782
US-A1- 2014 260 715

**Beschreibung**

Gebiet der Erfindung

Die Erfindung betrifft eine Anordnung zum Vorspannen einer Seil-Rotationspendel-Kinematik, bei der eine Drehbewegung eines Rotationskörpers mit Hilfe von Wickelseilen in eine translatorische Bewegung eines Wickelkörpers umgewandelt wird, wobei dem Rotationskörper im vorgespannten Zustand ein Drehmoment beaufschlagt ist. Die Erfindung betrifft auch eine Verwendung der Anordnung zum Schalten.

Hintergrund der Erfindung

Hohe Kurzschlussströme bedeuten für Mittelspannungs-Schaltanlagen und -Betriebsmittel hohe mechanische und thermische Belastungen. Die mechanische Belastung ist proportional zum Quadrat des Stroms und wird von der Höhe des Stoßkurzschlussstroms bestimmt, der wenige Millisekunden nach Beginn des Kurzschlusses auftritt. Die thermische Belastung wird durch das zeitliche Stromintegral bestimmt, in das neben der Größe des Stroms auch wesentlich die Kurzschlussdauer eingeht. Um die Belastungen durch Kurzschlussströme auf die Betriebsmittel zu reduzieren, ist es daher notwendig, sowohl die Amplitude des Stoßkurzschlussstroms als auch die Kurzschlussdauer deutlich zu reduzieren.

Schnelle Schalter mit einem integrierten Strombegrenzer könnten in der Lage sein, dies zu gewährleisten, indem sie den Stoßkurzschlussstrom so lange wirksam begrenzen, bis der schnelle Schalter den Stromkreis komplett unterbricht. Damit könnte es gelingen, das Stromintegral so weit zu begrenzen, dass die thermischen Belastungen der Betriebsmittel bei Kurzschluss in einem vertretbaren Rahmen bleiben.

In der Offenlegungsschrift WO 2016/110430 A1 ist ein "Kopplungsglied für ein elektrisches Schaltgerät" beschrieben, durch das ein Schaltvorgang mit der erforderlichen Dynamik ausgeführt werden kann. Dabei wird eine Rotationsbewegung des Kopplungsglieds mit Hilfe von Wickelseilen in eine Auf- und Abwärtsbewegung eines Wickelkörpers bzw. Stößels und damit in einen Schaltvorgang umgesetzt. Um die Rotation einer derartigen Seil-Rotationspendel-Kinematik in Gang zu setzen, dient als Kraftquelle bzw. als Energiespeicher ein Satz Federn, der über mehrere Primärseile kraftschlüssig mit dem Kopplungsglied verbunden ist. Der Inhalt der Offenlegungsschrift WO 2016/110430 A1 ist Bestandteil der Patentanmeldung.

Im vorgespannten Zustand üben die Federn auf die gegenüber der Ruhelage verdrehten Primärseile eine Kraft aus. Da die Primärseile an der Peripherie des Kopplungsglieds angreifen, wird so auf letzteres ein Drehmoment ausgeübt, das die Rotation der Seil-Rotationspendel-Kinematik in Gang setzt. Federsteifigkeit, Vorspannkraft und der durch die Details der Kraftführung über die Wickelseile und Primärseile definierten geometrischen Verhältnisse sind so ausgelegt, dass sich Schaltzeiten im Bereich von 3 ms realisieren lassen.

Als nachteilig erweist sich angesichts der extrem hohen Schaltdynamik des Kopplungsglieds, dass dadurch in den Federn sowohl Biege- als auch Longitudinal-Schwingungen angeregt werden. Die Amplituden dieser Schwingungen übertragen sich auf die Bewegung des Wickelkörpers und wirken sich ungünstig auf einen Schaltvorgang aus. Insbesondere beim Öffnen des Schalters können überlagerte Schwingungen der Federn, die via Primärseile und Wickelseile auf den Wickelkörper überkoppeln, die Funktion der Strombegrenzung sowie den Abriss des Funkens beeinträchtigen.

In der Offenlegungsschrift DE 28 43 368 A1 wird eine Gasdruckfeder zum Dämpfen der Schaltmechanik bei der Schaltbewegung von elektrischen Leistungsschaltern offenbart.

Zusammenfassung der Erfindung

Es ist Aufgabe der Erfindung, die vorstehend beschriebenen Nachteile zu vermeiden und eine Lösung anzugeben, die einen Schaltvorgang zuverlässiger macht.

Gemäß der Erfindung wird die gestellte Aufgabe mit der Anordnung und der Verwendung der unabhängigen Patentansprüche gelöst. Vorteilhafte Weiterbildungen sind in den abhängigen Ansprüchen angegeben.

Erfindungsgemäß wird anstelle von beispielsweise Spiral- oder Torsionsfedern eine Gasdruckfeder eingesetzt, die aus zwei konzentrisch angeordneten Metallbälgen bestehen kann, die - durch eine gemeinsame Bodenplatte und eine Deckelplatte verschlossen - ein hermetisch dichtes Behältnis für ein Gas bilden. Durch ein im Deckel angebrachtes Ventil kann das Behältnis mit Gas gefüllt werden. Die effektiven Radien der beiden Metallbälge sind so bemessen, dass sich beispielsweise bei einem Gasdruck von 50 bar eine Kraft auf die Boden- bzw. Deckelplatte von etwa 20 kN ergibt. Die Primärseile, die diese Vorspannkraft auf das Kopplungsglied der Offenlegungsschrift WO 2016/110430 A1 übertragen, sind mit einem Ende an der Deckelplatte der Gasdruckfeder eingehängt, mit dem anderen Ende an dem Kopplungsglied. Die Primärseile werden im drucklosen Zustand so eingebaut, dass sie nach dem Einhängen gestrafft und leicht vorgespannt sind. Die Primärseile sind nach dem Einhängen in die Deckelplatte der Gasdruckfeder und in den Rotationskörper der Rotationspendel-Kinematik bei Draufsicht auf die Deckelplatte radial ausgerichtet. Eine derartige Anordnung findet bei elektrischen Leistungsschaltern Verwendung.

Die Erfindung beansprucht eine Anordnung zum Vorspannen einer Seil-Rotationspendel-Kinematik, bei der eine Drehbewegung eines Rotationskörpers mit Hilfe von Wickelseilen in eine translatorische Bewegung eines Wickelkörpers umgewandelt wird, wobei dem Rotationskörper im vorgespannten Zustand ein Drehmoment beaufschlagt ist. Die Anordnung weist auf:

- einen vorzuspannenden, um seine Längsachse drehbaren, in Richtung der Längsachse unbeweglichen Rotationskörper einer Seil-Rotationspendel-Kinematik,
- mindestens eine den Rotationskörper umschließende Gasdruckfeder, die in Richtung der Längsachse komprimierbar ist, und
- Primärseile, die den Rotationskörper mit der Gasdruckfeder derart kraftschlüssig verbinden, dass eine Drehbewegung des Rotationskörpers eine Stauchung der Gasdruckfeder bewirkt, wodurch die Anordnung vorgespannt ist.

Die Erfindung bietet den Vorteil, dass es bei schnellen Schaltvorgängen zu keinen durch Federn verursachten, ungewollten Schwingungen kommt.

In einer Weiterbildung weist die Gasdruckfeder eine Bodenplatte und eine dazu parallel ausgerichtete Deckelplatte auf.

In einer weiteren Ausgestaltung weist die Gasdruckfeder mindestens einen mit Gas füllbaren Metallbalg auf, der zwischen der Deckelplatte und der Bodenplatte angeordnet ist.

In einer weiteren Ausführungsform kann der Metallbalg mit einem kohlenstofffaserverstärktem Kunststoff ummantelt sein. Dadurch werden Vibrationen noch wirkungsvoller gedämpft.

In einer weiteren Ausgestaltung können die Primärseile mit einem Ende in der Deckelplate und mit dem anderen Ende an dem Rotationskörper befestigt sein. Dadurch kommt es zu einer effektiven Kraftübertragung von der Gasdruckfeder auf den Rotationskörper.

Desweiteren kann in einem gasgefüllten Zustand der Gasdruckfeder der Druck des Gases in dem Metallbalg mindestens 50 bar betragen.

In einer bevorzugten Ausgestaltung ist der Rotationskörper rohrförmig ausgebildet. Dadurch wird in seinem Inneren Platz geschaffen.

Die Anordnung kann des Weiteren zwei aufeinander, spiegelbildlich angeordnete Gasdruckfedern aufweisen. Dadurch heben sich die durch die Gasdruckfedern wirkenden Lagerungskräfte des Rotationskörpers gegenseitig auf.

In einer Weiterbildung liegen die Bodenplatten der zwei Gasdruckfedern aufeinander.

Außerdem kann die Anordnung eine Ausgleichsbohrung oder eine Drosselventil durch die Bodenplatten aufweisen, die den Gasdruck zwischen den zwei Gasdruckfedern ausgleicht.

Die Erfindung beansprucht auch eine Verwendung der erfindungsgemäßen Anordnung in einem elektrischen Leistungsschalter zum Vorspannen einer Seil-Rotationspendel-Kinematik.

Weitere Besonderheiten und Vorteile der Erfindung werden aus den nachfolgenden Erläuterungen mehrerer Ausführungsbeispiele anhand von schematischen Zeichnungen ersichtlich.

Es zeigen:

Fig. 1: eine Schnittansicht durch eine auf einem Rotationskörper angeordnete Gasdruckfeder,

Fig. 2: eine Draufsicht auf eine auf einem Rotationskörper angeordnete Gasdruckfeder,

Fig. 3: eine Draufsicht auf eine auf einem Rotationskörper angeordnete Gasdruckfeder mit einem um 45 Grad verdrehten Rotationskörper und

Fig. 4: eine Schnittansicht durch zwei auf einem Rotationskörper symmetrisch angeordnete Gasdruckfedern.

Detaillierte Beschreibung mehrerer Ausführungsbeispiele

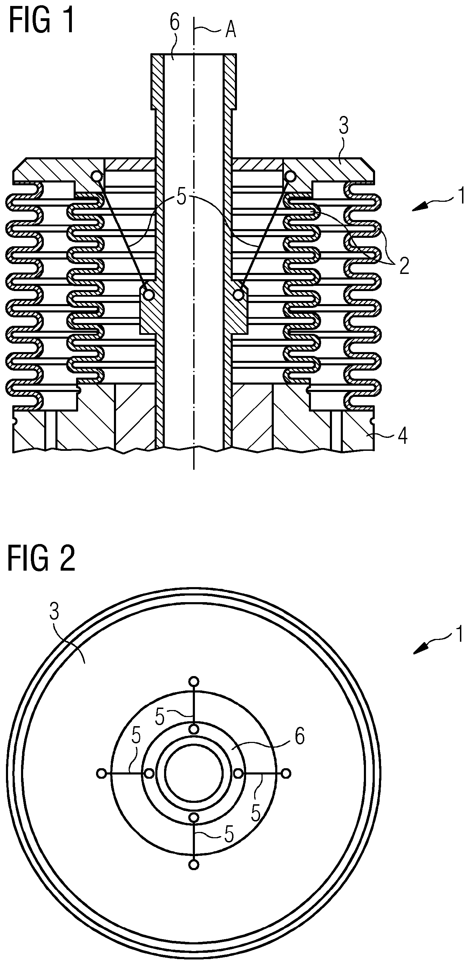

Fig. 1 zeigt einen Querschnitt durch eine Gasdruckfeder 1, die aus zwei konzentrisch angeordneten Metallbälgen 2 besteht, die - durch eine gemeinsame Bodenplatte 4 und eine Deckelplatte 3 verschlossen - ein hermetisch dichtes Behältnis für ein Gas bilden. Durch ein in die Deckelplatte 3 angebrachtes nicht dargestelltes Ventil kann das Behältnis mit Gas gefüllt werden. Die effektiven Radien der beiden Metallbälge 2 sind so bemessen, dass sich beispielsweise bei einem Gasdruck von 50 bar eine Kraft auf die Boden- bzw. Deckelplatte 3, 4 von etwa 20 kN ergibt.

Durch die Gasdruckfeder 1 verläuft konzentrisch angeordnet der Rotationskörper 6 einer Seil-Rotationspendel-Kinematik gemäß der Offenlegungsschrift WO 2016/110430 A1. Primärseile 5, die die Vorspannkraft auf die Seil-Rotationspendel-Kinematik übertragen, sind mit einem Ende an der Deckelplatte 3 der Gasdruckfeder 1 eingehängt, mit dem anderen Ende an dem Rotationskörper 6. Die Primärseile 5 werden im drucklosen Zustand der Gasdruckfeder 1 so eingebaut, dass sie nach dem Einhängen gestrafft und leicht vorgespannt sind. Die Primärseile 5 sind nach dem Einhängen in die Deckelplatte 3 der Gasdruckfeder 1 und in den Rotationskörper 6 der Seil-Rotationspendel-Kinematik bei Draufsicht auf die Deckelplatte 3 radial ausgerichtet, wie in **Fig. 2** zu erkennen ist.

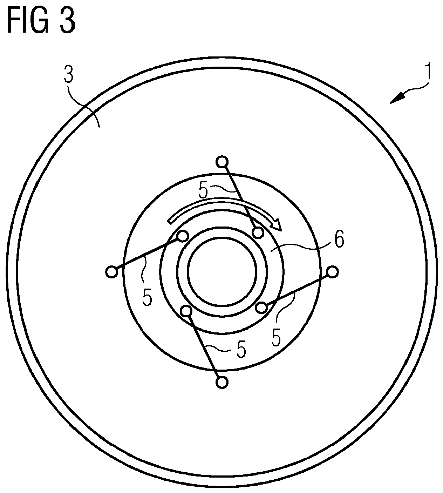

Für die Beschreibung der **Fig. 2** und **Fig. 3** sei zunächst angenommen, dass der Rotationskörper 6 durch ein geeignetes Lager daran gehindert wird, sich in Richtung der Längsachse A zu bewegen. Er vermag vielmehr nur eine Rotation um die Längsachse A auszuführen. Wird die Gasdruckfeder 1 mit Gas gefüllt, so baut sich ein Druck auf, der auf die Deckelplatte 3 in Richtung der Längsachse A wirkt und damit eine Zugkraft auf die Primärseile 5 ausübt.

Wird der Rotationskörper 6 durch ein entsprechendes Mittel (z.B. durch einen Motor) um einen vorgebbaren Winkel aus der ursprünglichen Position gedreht, wie in **Fig. 3** dargestellt, so erzeugt die unter Druck stehende Gasdruckfeder 1 eine Kraft auf die Primärseile 5, die an den Einhängepunkten der Primärseile 5 ein Drehmoment erzeugen, das der tangentialen Komponente der durch die Primärseile 5 auf den Rotationskörper 6 übertragenen Kraft multipliziert mit dem Radius des Einhängepunkts am Rotationskörper 6 entspricht. Mit Wickelseilen kann ein im Inneren des Rotationskörpers 6 befindlicher nicht dargestellter Wickelkörper in eine Längsbewegung gemäß der Offenlegungsschrift WO 2016/110430 A1 versetzt werden.

Eine beispielhafte Auslegung liefert bei einem Druck von 50 bar bei einer Verdrehung des Rotationskörpers 6 von 45 Grad um die Längsachse A ein Anfangsdrehmoment von 300 Nm, das über den Rotationskörper 6 auf die Seil-Rotationspendel-Kinematik wirkt. Da die Seillänge sich im dynamischen Betrieb nicht verändert, wird durch die Verdrehung die Deckelplatte 3 nach unten in Richtung Bodenplatte 4 gezogen (**Fig. 1**) und somit die Gasdruckfeder 1 gestaucht. Dies führt zu einer leichten Modulation des Gasdrucks aufgrund der Pendelbewegung des Rotationskörpers 6.

Bei der in **Fig. 1** dargestellten Anordnung würde auf ein Lager zur Unterdrückung einer Bewegung des Rotationskörpers 6 in axialer Richtung eine resultierende erhebliche Kraft einwirken, sobald die Gasdruckfeder 1 auf ihren Nenndruck aufgepumpt wird. Im Beispiel beträgt der Nenndruck 50 bar, woraus sich bei der vorgegebenen Geometrie der Gasdruckfeder 1 eine Kraft auf das Lager von etwa 20 kN ergibt.

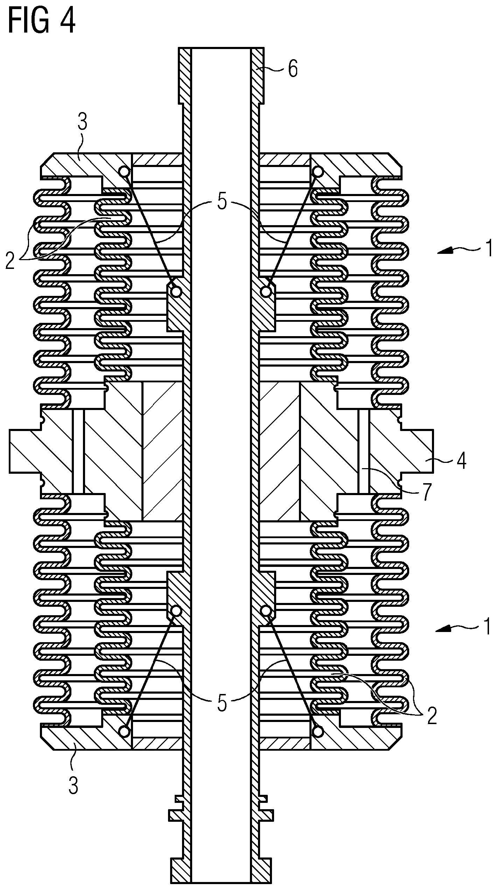

Ein solches, hohen Kräften ausgesetztes Lager kann vollständig vermieden werden, wenn eine symmetrische Anordnung realisiert wird, wie sie in **Fig. 4** gezeigt wird. Wie der Darstellung entnommen werden kann, sind zwei Gasdruckfedern 1 vorgesehen, deren Kraftrichtung bei Druckbeaufschlagung entgegengesetzt ist. Bei gleicher Dimensionierung der beiden Gasdruckfedern 1 und bei einem gleichen Gasdruck sind die Kräfte, welche die beiden Gasdruckfedern 1 auf die jeweiligen Deckelplatten 3 über die Primärseile 5 auf den Rotationskörper 6 ausüben, entgegengesetzt gleich und heben sich daher auf. Ein Lager zur Kompensation axialer Kräfte ist damit nicht erforderlich. Hingegen wirken die Drehmomente von unterer und oberer Primärseilanordnung in die gleiche Richtung, d.h. sie addieren sich.

Um eine Gleichstellung der Drücke in beiden Gasdruckfedern 1 herzustellen, kann ggf. eine Ausgleichsbohrung 7 vorgesehen werden, durch die ein Druckausgleich stattfindet. Die Ausgleichsbohrung 7 kann zur Unterdrückung von Druckschwingungen zwischen den beiden Gasfedern 1 eine Strömungsdrossel aufweisen.

Die Anzahl der Primärseile 5, wie sie in **Fig. 2** und **Fig. 3** gezeigt ist, muss nicht notwendigerweise vier betragen. Aus Gründen der Stabilität gegenüber Ausknicken der Metallbälge 2 sollten aber mindestens drei Primärseile 5 je Gasdruckfeder 1 in Winkelabständen von 120° eingesetzt werden. Ansonsten kann - natürlich unter Beachtung einer sinnvollen Konstruktion - eine beliebige Zahl N an Seilen eingesetzt werden, wobei deren Winkelabstand zueinander gegeben ist durch $\varphi = 360°/N$.

Zur Unterdrückung von Longitudinal- oder Biegeschwingungen der Metallbälge 2 können diese mit einer CFK-Ummantelung umgeben werden. Aufgrund der Eigenschaften des Faser-Kunstharz-Vergusses werden Schwingungen gedämpft. Außerdem kann dies einen Schutz gegen die hohen dynamischen Belastungen darstellen, die bei den extrem kurzen Schaltzeiten der Seil-Rotationspendel-Kinematik im Material der Metallbälge 2 auftreten.

Durch die extrem hohe Schaltdynamik ist es unvermeidlich, dass in herkömmlichen Vorspannfedern (z.B. Spiralfedern), die als Energiespeicher für den Seilpendel-Antrieb verwendet werden, Schwingungen angeregt werden. Diese Schwingungen koppeln über die Wickelseile auch auf den Antrieb über und können die bereits eingangs genannten Probleme beim Schalten verursachen.

Die Gasdruckfeder 1, die aus Metallbälgen 2 aufgebaut ist, hat dem gegenüber einen gravierenden Vorteil aufzuweisen. Der Druck des Gases in der durch die Metallbälge 2, der Bodenplatte 4 und der Deckelplatte 3 gebildeten Gasdruckfeder 1 folgt der bekannten Beziehung für ideale Gase:

$$p*V = \text{const.} , \qquad\qquad\qquad\qquad\qquad (1)$$

wobei p der Druck und V das Volumen ist.

Wie beispielsweise Simulationsrechnungen und Versuche ergeben haben, haben Schwingungen der Metallbälge 2 keinen nennenswerten Einfluss auf das durch die Metallbälge 2 eingeschlossene Volumen V der Gasdruckfedern 1 und damit auch nicht auf den Druck als Ursache für das über die Primärseile 5 auf den Rotationskörper 6 wirkende

EP 3 596 745 B1

Drehmoment. Damit sind Störungen durch unvermeidliche Resonanzen wirkungsvoll abgekoppelt.

Ein weiterer Vorteil ergibt sich durch die konzentrische Anordnung der Gasdruckfedern 1 um den Rotationskörper 6. Dies erlaubt eine kompakte Bauweise dieser zentralen Antriebseinheit.

Bezugszeichenliste

1 Gasdruckfeder
2 Metallbalg
3 Deckelplatte
4 Bodenplatte
5 Primärseil
6 Rotationskörper
7 Ausgleichsbohrung
A Längsachse

**Patentansprüche**

1. Anordnung zum Vorspannen einer Seil-Rotationspendel-Kinematik, bei der eine Drehbewegung eines Rotationskörpers (6) mit Hilfe von Wickelseilen in eine translatorische Bewegung eines Wickelkörpers umgewandelt wird, wobei dem Rotationskörper (6) ein Drehmoment beaufschlagbar ist, aufweisend:

   - einen vorzuspannenden, um seine Längsachse (A) drehbaren, in Richtung der Längsachse (A) unbeweglichen Rotationskörper (6) einer Seil-Rotationspendel-Kinematik,

   **gekennzeichnet durch:**

   - mindestens eine den Rotationskörper (6) umschließende Gasdruckfeder (1), die in Richtung der Längsachse (A) komprimierbar ist und
   - Primärseile (5), die den Rotationskörper (6) mit der Gasdruckfeder (1) derart kraftschlüssig verbinden, dass eine Drehbewegung des Rotationskörpers (6) eine Stauchung der Gasdruckfeder (1) bewirkt, wodurch die Anordnung vorgespannt ist.

2. Anordnung nach Anspruch 1,
   **gekennzeichnet durch:**

   - eine Bodenplatte (4) und eine dazu parallel ausgerichtete Deckelplatte (3) der Gasdruckfeder (1).

3. Anordnung nach Anspruch 2,
   **gekennzeichnet durch:**

   - mindestens einen mit Gas füllbaren Metallbalg (2) der Gasdruckfeder (1), der zwischen der Deckelplatte (3) und der Bodenplatte (4) angeordnet ist.

4. Anordnung nach Anspruch 3,
   **dadurch gekennzeichnet,**
   **dass** der Metallbalg (2) mit einem kohlenstofffaserverstärktem Kunststoff ummantelt ist.

5. Anordnung nach Anspruch 3 oder 4,
   **dadurch gekennzeichnet,**
   **dass** die Primärseile (5) mit einem Ende in der Deckelplate (3) und mit dem anderen Ende an dem Rotationskörper (6) befestigt sind.

6. Anordnung nach einem der Ansprüche 3 bis 5,
   **dadurch gekennzeichnet,**
   **dass** in einem gasgefüllten Zustand der Gasdruckfeder (1) der Druck des Gases in dem Metallbalg (2) mindestens 50 bar beträgt.

**7.** Anordnung nach einem der vorhergehenden Anspruche,
**dadurch gekennzeichnet,**
**dass** der Rotationskörper (6) rohrförmig ausgebildet ist.

**8.** Anordnung nach einem der vorhergehenden Ansprüche,
**gekennzeichnet durch:**

- zwei aufeinander, spiegelbildlich angeordnete Gasdruckfedern (1).

**9.** Anordnung nach Anspruch 8 und einem der Ansprüche 2 bis 7,
**dadurch gekennzeichnet,**
**dass** die Bodenplatten (4) der zwei Gasdruckfedern (1) aufeinander liegen.

**10.** Anordnung nach Anspruch 9,
**gekennzeichnet durch:**

- eine Ausgleichsbohrung (7) durch die Bodenplatten (4), die ausgebildet ist, den Gasdruck zwischen den zwei Gasdruckfedern (1) auszugleichen oder Schwingungen zu dämpfen.

**11.** Verwendung einer Anordnung nach einem der vorhergehenden Ansprüche beim Schalten eines elektrischen Leistungsschalters zum Vorspannen einer Seil-Rotationspendel-Kinematik.

**Claims**

**1.** Arrangement for prestressing a cable/rotary pendulum kinematic system, in the case of which arrangement a rotational movement of a rotational body (6) is converted with the aid of wound cables into a translational movement of a winding body, it being possible for the rotational body (6) to be loaded with a torque, having:

- a rotational body (6) of a cable/rotary pendulum kinematic system, which rotational body (6) is to be prestressed, can be rotated about its longitudinal axis (A), and is immovable in the direction of the longitudinal axis (A),

**characterized by:**

- at least one gas pressure spring (1) which encloses the rotational body (6) and can be compressed in the direction of the longitudinal axis (A), and
- primary cables (5) which connect the rotational body (6) to the gas pressure spring (1) in a non-positive manner in such a way that a rotational movement of the rotational body (6) brings about a compression of the gas pressure spring (1), as a result of which the arrangement is prestressed.

**2.** Arrangement according to Claim 1,
**characterized by:**

- a base plate (4) and a cover plate (3) of the gas pressure spring (1), which cover plate (3) is oriented in parallel with respect to said base plate (4).

**3.** Arrangement according to Claim 2,
**characterized by:**

- at least one metal bellows (2) of the gas pressure spring (1), which metal bellows (2) can be filled with gas and is arranged between the cover plate (3) and the base plate (4).

**4.** Arrangement according to Claim 3,
**characterized**
**in that** the metal bellows (2) is encapsulated with a carbon fiber-reinforced plastic.

**5.** Arrangement according to Claim 3 or 4,
**characterized**
**in that** the primary cables (5) are fastened with one end in the cover plate (3) and with the other end to the rotational body (6).

**6.** Arrangement according to one of Claims 3 to 5,
**characterized**
**in that**, in a gas-filled state of the gas pressure spring (1), the pressure of the gas in the metal bellows (2) is at least 50 bar.

**7.** Arrangement according to one of the preceding claims,
**characterized**
**in that** the rotational body (6) is of tubular configuration.

**8.** Arrangement according to one of the preceding claims,
**characterized by:**

- two gas pressure springs (1) which are arranged on one another in a mirror-inverted manner.

**9.** Arrangement according to Claim 8 and one of Claims 2 to 7,
**characterized**
**in that** the base plates (4) of the two gas pressure springs (1) lie on one another.

**10.** Arrangement according to Claim 9,
**characterized by:**

- an equalizing bore (7) through the base plates (4) which is configured to equalize the gas pressure between the two gas pressure springs (1) or to damp vibrations.

**11.** Use of an arrangement according to one of the preceding claims during switching of an electric circuit breaker for prestressing a cable/rotary pendulum kinematic system.


**Revendications**

**1.** Ensemble destiné à précontraindre un mécanisme cinématique câble-pendule rotatif, dans lequel un mouvement de rotation d'un solide de révolution (6) est converti à l'aide de câbles d'enroulement en mouvement de translation d'un corps d'enroulement, un couple pouvant être appliqué au solide de révolution (6), l'ensemble présentant :

- un solide de révolution (6) à précontraindre d'un mécanisme cinématique câble-pendule rotatif, pouvant tourner autour de son axe longitudinal (A) et immobile en direction de l'axe longitudinal (A),

**caractérisé par :**

- au moins un ressort de compression à gaz (1) qui entoure le solide de révolution (6) et qui peut être comprimé en direction de l'axe longitudinal (A), et
- des câbles primaires (5), qui relient à force le solide de révolution (6) au ressort de compression à gaz (1), de telle sorte qu'un mouvement de rotation du solide de révolution (6) provoque une compression du ressort de compression à gaz (1), ce qui a pour effet que l'ensemble est précontraint.

**2.** Ensemble selon la revendication 1,
**caractérisé par :**

- une plaque de base (4) et une plaque de recouvrement (3) du ressort de compression à gaz (1) alignée parallèlement à celle-ci .

**3.** Ensemble selon la revendication 2,
**caractérisé par :**

- au moins un soufflet métallique (2), pouvant être rempli de gaz, du ressort de compression à gaz (1), lequel soufflet est disposé entre la plaque de recouvrement (3) et la plaque de base (4) .

4. Ensemble selon la revendication 3,
   **caractérisé en ce que**
   le soufflet métallique (2) est revêtu d'une matière plastique renforcée de fibres de carbone.

5. Ensemble selon la revendication 3 ou 4,
   **caractérisé en ce que**
   les câbles primaires (5) sont fixés à une extrémité dans la plaque de recouvrement (3) et à l'autre extrémité au solide de révolution (6).

6. Ensemble selon l'une des revendications 3 à 5,
   **caractérisé en ce que**
   dans un état rempli de gaz du ressort de compression à gaz (1), la pression du gaz dans le soufflet métallique (2) est d'au moins 50 bar.

7. Ensemble selon l'une des revendications précédentes,
   **caractérisé en ce que**
   le solide de révolution (6) est conçu sous forme de tuyau.

8. Ensemble selon l'une des revendications précédentes,
   **caractérisé par :**

   - deux ressorts de compression à gaz disposés l'un sur l'autre, de manière symétrique.

9. Ensemble selon la revendication 8 et l'une des revendications 2 à 7,
   **caractérisé en ce que**
   les plaques de base (4) des deux ressorts de compression à gaz (1) reposent l'une sur l'autre.

10. Ensemble selon la revendication 9,
    **caractérisé par :**

    - un alésage de compensation (7) à travers les plaques de base (4) qui est conçu pour compenser la pression de gaz entre les deux ressorts de compression à gaz (1) ou pour amortir les vibrations.

11. Utilisation d'un ensemble selon l'une des revendications précédentes lors de la commutation d'un disjoncteur électrique pour la précontrainte d'un mécanisme cinématique câble-pendule rotatif.

FIG 1

FIG 2

FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016110430 A1

- DE 2843368 A1